# EUROPÄISCHE PATENTSCHRIFT

(11) **EP 0 479 293 B1**
(45) Veröffentlichungstag und Bekanntmachung des Hinweises auf die Patenterteilung: **03.01.1996**
(21) Anmeldenummer: 91116876.3
(22) Anmeldetag: 02.10.1991
(51) Int. Cl.: B03B 9/06

(54) **Verfahren zur Auftrennung von metallhaltigen Müllkomponenten**
Method of separating metal-containing waste components
Procédé pour la séparation des composantes de déchets contenant des métaux

(30) Priorität: 04.10.1990 DE 4031417
(43) Veröffentlichungstag der Anmeldung: 08.04.1992
(73) Patentinhaber: Krauss, Peter, Prof. Dr., D-72766 Reutlingen (DE)
(72) Erfinder: Krauss, Peter, Prof. Dr., D-72766 Reutlingen (DE)
(74) Vertreter: Kinzebach, Werner, Dr.

(56) Entgegenhaltungen:
- GB-A- 1 594 216
- US-A- 3 848 813
- US-A- 4 098 464
- US-A- 4 242 197
- US-A- 4 874 134

## Beschreibung

Die Erfindung betrifft ein Verfahren zur Auftrennung von metallhaltigen Müllkomponenten, insbesondere von Schwermetallen und Aluminium sowie eine Vorrichtung zur Durchführung des Verfahrens.

Kompost aus Hausmüll ist in immer stärkeren Maße mit Schwermetallen, wie Blei, Zink, Cadmium, Quecksilber und in neuerer Zeit auch Kupfer, kontaminiert. Die Verwertung von Kompost wird dadurch erheblich erschwert. Die Schwermetalle gelangen über zahlreiche Produkte in den Müll, beispielsweise Blei in Form von Bleikappen von Weinflaschen, Bleilot z.B. auf Glühbirnen, Bleischrot, Bleitaschen von Sofortbildfilmen, Kabelummantelungen, Kapseln, Tuben, Lametta; Kupfer beispielsweise in Form von Elektrokabelresten, Messingartikeln (Beschläge, Kugelschreiberminen, Reißverschlüsse, Glühbirnen, Schrauben); Nickel, Zink, Cadmium, Quecksilber beispielsweise über Batterien, Knopfzellen und Thermometer.

Eine Abtrennung der erwähnten Schwermetallbestandteile aus dem in den Müllverwertungsanlagen angelieferten Hausmüll ist bisher praktisch nicht möglich, weil es sich um relativ geringe Mengen handelt, und das Erkennen und Aussortieren der jeweils gewünschten Schwermetallbestandteile in der Praxis auf kaum zu überwindende Schwierigkeiten stößt.

So wird beispielsweise in US-A 3 848 813 ein Verfahren zur Auftrennung von nicht vorsortiertem Hausmüll in unterschiedliche Komponenten beschrieben. Die dort aufgeführten Verfahrensschritte umfassen das Shreddern des Hausmülls, mehrere Windsichtungen, magnetische Trennschritte und Elutrierschritte zum Abtrennen von organischem Abfall.

Neben den ökologischen Problemen durch die entstehenden Prozeßabwässer besitzt das in der US-A 3 848 813 beschriebene Verfahren den Nachteil, daß die Auftrennung von metallhaltigen Müllkomponenten nicht zufriedenstellend gelöst werden kann. Ursache hierfür ist vor allem die Tatsache, daß das Verfahren auf nicht vorsortierten Hausmüll gerichtet ist, so daß die einzelnen Verfahrensschritte nicht hinreichend spezifisch auf die einzelnen Müllkomponenten abgestimmt sind. Insbesondere ist die Rückgewinnung des Wertstoffs Aluminium sowie die Trennung von schwermetallhaltigen Schadstoffen vom übrigen deponiefähigen Restmüll nicht möglich.

Um zu verhindern, daß die hier in Rede stehenden Schwermetallbestandteile weiterhin in den Hausmüll und damit auch in den daraus hergestellten Kompost gelangen, ist es erforderlich, die Schwermetallbestandteile bereits im Haushalt, noch bevor sie in den Hausmüll gelangen, abzufangen. Für Batterien wird dies bereits seit längerer Zeit in vielen Städten und Landkreisen praktiziert, nicht jedoch für andere schwermetallhaltige Materialien.

Ein Modellversuch zur getrennten Erfassung einiger Metalle aus Haushalten hat gezeigt, daß es grundsätzlich möglich ist, durch Sammlung der erwähnten Schadstoffe und des Wertstoffs Aluminium den Schadstoffgehalt im Hausmüll erheblich zu verringern. Dieser Erfolg wurde mit einem Sammelprogramm für die Metalle Blei, Cadmium, Quecksilber, Kupfer, Zink und Aluminium in ihren haushaltsrelevanten Erscheinungsformen erzielt. Dabei traten jedoch zwei Probleme auf. Zum einen liegt die Menge des nicht bestimmungsgemäß eingesammelten Materials mit ca. 50 % sehr hoch. Es handelt sich dabei vor allem um Eisenmaterialien, wie Weißblechdosen und Kronkorken, und um aluminiumbeschichtete Plastikfolien. Zum anderen fehlte ein Verfahren zur Auftrennung des nach der Sammlung erhaltenen Abfallschadstoffgemisches und insbesondere zur Abtrennung des Wertstoffes Aluminium.

Der vorliegenden Erfindung liegt daher die Aufgabe zugrunde, ein Verfahren und eine Vorrichtung zur Verfügung zu stellen, die geeignet sind, Abfallschadstoffgemische so aufzutrennen, daß die einzelnen Bestandteile getrennt entsorgt werden können. Insbesondere soll eine Auftrennung in die eigentlichen Schadstoffe, den Wertstoff Aluminium und in die Reststoffe, die auf eine Hausmülldeponie gegeben werden können, erfolgen.

Diese Aufgabe wird gelöst durch ein Verfahren zur Abtrennung von Metallen, insbesondere Schwermetallen und Aluminium aus metallhaltigen Müllkomponenten, wobei man
a) grob zerkleinerte metallhaltige Müllkomponenten als Schüttgut auf Fördermitteln unter einem Magneten, der mit Mitteln zur selektiven Entfernung von leichtem ferromagnetischem Material ausgestattet ist, hindurchführt,
b) das verbleibende Gut einem zweiten Magneten zur Entfernung von schwerem ferromagnetischem Material zuführt,
c) das verbleibende nicht-magnetische Material einer Windsichtung unterwirft, wobei das mit der Sichtluft ausgetragene leichtere Material, das insbesondere Kunststoffolien, Aluminiumfolien, Papier etc. umfaßt, von dem zurückbleibenden schwereren Material, das insbesondere Glasflaschen, Glühbirnen, nicht-magnetische Batterien etc. umfaßt, getrennt wird.

Das Verfahren ist dadurch gekennzeichnet, daß man ferner
d) das leichtere Material auf eine Teilchengröße von maximal 50 mm zerkleinert,
e) dieses Material mindestens einmal siebt und einer nochmaligen Windsichtung unterwirft, so daß Kunststoff- oder Aluminiummaterialien voneinander getrennt werden,
wobei man in Stufe e) beim Siebvorgang ein Sieb verwendet, dessen Lochung nur wenig kleiner ist als die maximale Teilchengröße des in Stufe d) erhaltenen zerkleinerten Materials.

Als Ausgangsmaterial für das erfindungsgemäße Verfahren kann ein Material zur Anwendung kommen, das beispielsweise aus stationären oder mobilen Sammelstellen der Kommunen oder anderer Organisationen stammt oder das das Sammelergebnis einzelner Haushalte darstellt. Diese Materialien enthalten die bereits oben geschilderten Metallbestandteile, die magnetischer und nicht-magnetischer Natur sein können. Dazu zählen in erster Linie Eisenbestandteile, wie Weißblechdosen, Kronkorken etc.; Blei, beispielsweise in Form von Bleikappen von Weinflaschen, Bleilot, Bleitaschen von Sofortbildfilmen, Kabelummantelungen, Kapseln, Tuben, Lametta, Kupfer, beispielsweise in Form von Elektrokabelresten und Messingartikeln, wie Beschläge, Kugelschreiberminen, Reißverschlüsse, Glühbirnen, Schrauben, sowie Nickel, Zink, Cadmium und Quecksilber (beispielsweise Batterien, Knopfzellen, Thermometer). Als weiteren wichtigen Bestandteil enthalten die Ausgangsmaterialien Aluminium, das insbesondere in Form von Aluminiumfolien enthalten ist. Neben den Metallkomponenten enthalten die Ausgangsmaterialien jedoch auch eine große Menge an nicht-metallischen Fremdstoffen, beispielsweise Glas, Papiermaterialien und Kunststoffmaterialien.

Vorzugsweise verwendet man ein Ausgangsmaterial mit einer maximalen Teilchengröße von 200 mm. Falls erforderlich, muß das Ausgangsmaterial mit Hilfe einer geeigneten Zerkleinerungsvorrichtung zerkleinert werden, beispielsweise einer langsamlaufenden Rotorschere.

Das gegebenenfalls zerkleinerte Material wird zunächst mit einem Förderband, beispielsweise einem Gurtförderer, unter einem Überbandmagneten zur selektiven Entfernung von leichtem ferromagnetischem Material (im folgenden als Eisenmaterial bezeichnet) durchgeführt. Die Wirkfläche des Magneten ist dem Förderband zugewandt und befindet sich in einer solchen Entfernung über der Förderebene des Förderbandes, daß leichte Eisenmaterialien, wie Dosen und Kronkorken, angezogen und damit aus dem Schüttgut entfernt werden. Über die Wirkfläche des Magneten läuft ein weiteres Förderband, welches das vom Magneten angezogene leichtere Eisenmaterial seitlich austrägt. Schwereres eisenhaltiges Material, insbesondere Batterien, verbleiben im Schüttgut.

Das verbleibende Schüttgut wird nun zur Entfernung von schwerem Eisenmaterial einem zweiten Magneten, vorzugsweise einem Trommelmagneten zugeführt. Dies kann ebenfalls über ein Förderband oder über eine Schüttelrinne etc. erfolgen. Mit Hilfe des Magneten werden selektiv schwerere Eisenmaterialien, insbesondere schwere Batterien, aufgrund ihres im Mantel vorhandenen Eisengehalts, erfaßt und ausgetragen. Der Trommelmagnet besteht vorzugsweise aus einer rotierenden Trommel und einem starren halbzylindrischen Magneten, der sich in der Trommel befindet.

Das verbleibende nicht-magnetische Material wird, vorzugsweise im freien Fall, einer Windsichtung unterworfen. Dies erfolgt vorzugsweise mit einem Gebläse, das vertikal zur Fallrichtung des nicht-magnetischen Materials gerichtet ist. Die Strömungsgeschwindigikeit des Gebläses wird so justiert, daß schwerere Gegenstände, wie Glasflaschen, Glühbirnen, nicht-magnetische Batterien etc. den freien Fall fortsetzen und anschließend aufgesammelt werden können.

Das leichtere mit der Sichtluft ausgetragene Material besteht unter diesen Bedingungen vor allem aus Kunststoffolien, Aluminiumfolien und Papier.

Das leichtere Material wird dann, vorzugsweise im Luftstrom des erwähnten Gebläses, einer Zerkleinerungsvorrichtung zugeführt, um es so zu zerkleinern, daß es eine maximale Teilchengröße von 50 mm aufweist. Vorzugsweise handelt es sich bei der Zerkleinerungsvorrichtung um eine Messermühle, die mit einer Mahlbahn mit auswechselbarer Lochung als Zwangsaustrag ausgerüstet ist. Die Löcher haben Durchmesser von ca. 5 bis 50 mm, Vorzugsweise von 10 bis 40 mm. Auf diese Weise wird eine selektive Zerkleinerung von Kunststoffolien und Aluminiumfolien sichergestellt. Dabei werden die Aluminiumfolien zerknüllt und stark verkleinert, während die Korngröße der Kunststoffolien wesentlich weniger reduziert wird. Ihre durchschnittliche Körnung liegt im allgemeinen noch über dem Durchmesser der Lochung.

Das zerkleinerte leichtere Material wird im Luftstrom ausgetragen und die Luft wird in einem nachgeschalteten Zyklon entspannt. Das zerkleinerte Gut wird dann gesiebt und einer weiteren Windsichtung unterworfen. Vorzugsweise erfolgt dies mit einem Aspirateur (Getreidereinigungsmaschine), der mit zwei Siebvorrichtungen und einem Windsichter ausgerüstet ist. Auf diese Weise werden Kunststoff- und Aluminiummaterialien getrennt.

Das zerkleinerte Gut, das sich im Einfülltrichter des Aspirateurs gesammelt hat, wird kontinuierlich, beispielsweise mittels einer Riffelwalze, ausgetragen und einer Siebvorrichtung zugeführt. Dies erfolgt vorzugsweise so, daß das Gut im freien Fall auf das Sieb fällt. Bei der Siebvorrichtung handelt es sich vorzugsweise um ein Schwingsieb, beispielsweise mit einer Quadrat-, Rund- oder Schlitzlochung. Vorzugsweise wird zweimal gesiebt. Die Lochung der ersten Siebvorrichtung ist nur geringfügig, insbesondere 10 bis 20 % kleiner als die Lochung der oben erwähnten Zerkleinerungsvorrichtung, d.h., daß die Lochung im Bereich von 4 bis 45 mm liegen kann. Der Siebüberlauf, der in erster Linie aus Kunststoffolienteilen besteht, wird ausgetragen, beispielsweise über eine vibrierende Austragsrinne oder eine Austragsschnecke.

Der Siebdurchgang wird einer zweiten Siebvorrichtung zugeführt, die vorzugsweise unter der ersten liegt und ebenfalls als Schwingsieb ausgebildet ist. Die Lochung des zweiten Schwingsiebes beträgt vorzugsweise 0,5 bis 2 mm. Der Siebdurchgang wird als Feingut ausgetragen, beispielsweise über eine vibrierende Austragsrinne oder eine Austragsschnecke.

Der Siebüberlauf wird einem weiteren Windsichter zugeführt, bei dem es sich vorzugsweise um einen im Luftstrom regulierbaren Steigsichter handelt. Der Luftstrom wird so einreguliert, daß schwerere Materialien, vor allem Schwermetallpartikel, den Steigsichter passieren und als schwereres Material aufgesammelt werden. Mit der Sichtluft ausgetragenes Material, das vor allem aus Aluminiumfolie besteht, wird als Leichtfraktion abgetrennt, in einer Entspannungskammer entspannt und ausgetragen, beispielsweise über eine vibrierende Austragsrinne oder eine Austragsschnecke.

Zweckmäßigerweise wird das Gut, bevor es im freien Fall auf die erste Siebvorrichtung gelangt, einem leichten Unterdruck ausgesetzt, beispielsweise mit Hilfe eines im Luftstrom regulierbaren Ventilators. Auf diese Weise wird extrem leichtes, flugfähiges Material, beispielsweise Styropor- und sehr kleine Kunststoffolienteilchen, abgesaugt, in einer Entspannungskammer entspannt und ausgetragen, beispielsweise über eine vibrierende Austragsrinne oder eine Austragsschnecke. Alternativ hierzu kann die Abtrennung des extrem leichten Materials mit Hilfe eines im Luftstrom regulierbaren Windsichters (Steigsichter) und analoger Auftrennung erfolgen.

Die Vorrichtung zur Durchführung des Verfahrens mit
a) einem Förderband für den Transport der metallhaltigen Müllkomponenten,
b) einem Überbandmagneten, der über dem Förderband in einer solchen Entfernung angeordnet ist, daß aus den auf dem Förderband transportierten metallhaltigen Müllkomponenten leichteres ferromagnetisches Material selektiv entfernt wird,
c) einem zweiten Magneten zur Entfernung von schwererem ferromagnetischem Material aus dem verbleibenden Schüttgut,
d) eim Gebläse, dessen Luftstrom so einregulierbar ist, daß leichteres Material, das insbesondere Kunststofffolien, Aluminiumfolien, Papier etc. umfaßt, von schwererem Material, das insbesondere Glasflaschen, Glühbirnen, nicht-magnetische Batterien etc. umfaßt, getrennt werden,
ist gekennzeichnet durch
e) eine Zerkleinerungsvorrichtung zum Zerkleinern des durch das Gebläse abgetrennten flugfähigen Materials auf maximal 50 mm Partikelgröße,
f) einen der Zerkleinerungsvorrichtung nachgeordneten Aspirateur mit mindestens einer Siebvorrichtung und einem Windsichter, wobei
das Schwingsieb eine Lochung aufweist, die nur geringfügig kleiner ist als die maximale Partikelgröße des zerkleinerten Materials.

Der Überbandmagnet ist vorzugsweise mit Transportmitteln, insbesondere einem Förderband zum seitlichen austragen des vom Magneten angezogenen leichteren ferromagnetischen Materials ausgestattet.

Der zweite Magnet ist vorzugsweise ein Trommelmagnet aus einer rotierenden Trommel und einem starr angeordneten halbzylindrischen Magneten, der in der Trommel angeordnet ist.

Bei der Zerkleinerungsvorrichtung handelt es sich vorzugsweise um eine Messermühle, die eine Mahlbahn mit Löchern mit 5 bis 50 mm, vorzugsweise 10 bis 40 mm Durchmesser aufweist.
Bei den Siebvorrichtungen des Aspirateurs handelt es sich vorzugsweise um Schwingsiebe. Die erste Siebvorrichtung weist vorzugsweise eine Lochung auf, die nur geringfügig (10 bis 20 %) kleiner als die Lochung der Messermühle ist und im Bereich von 4 bis 45 mm liegt.

Die zweite Siebvorrichtung liegt vorzugsweise unterhalb der ersten und weist eine Lochung im Bereich von 0,5 bis 2 mm auf.

Der Aspirateur umfaßt außerdem einen Windsichter, bei dem es sich vorzugsweise um einen im Luftstrom regulierbaren Steigsichter handelt.

Außerdem umfaßt die erfindungsgemäße Vorrichtung übliche Austrags- und Sammelvorrichtungen, Entspannungsvorrichtungen, Vorrichtungen zur Abscheidung von Stäuben und extrem leichten Restbestandteilen (beispielsweise Zyklone) sowie andere übliche Vorrichtungen, die zur Durchführung des erfindungsgemäßen Verfahrens erforderlich sind.

Zweckmäßigerweise kann die Vorrichtung auch eine Vorrichtung zum Absaugen sehr leichten Materials, beispielsweise einem im Luftstrom regulierbaren Ventilator, umfassen. Dieser ist so angeordnet, daß er auf das im freien Fall auf die erste Siebvorrichtung gelangende Gut einwirkt.

Nachfolgend werden das erfindungsgemäße Verfahren und die erfindungsgemäße Vorrichtung anhand der in den Figuren gezeigten bevorzugten Ausführungsformen erläutert.

Es zeigen:

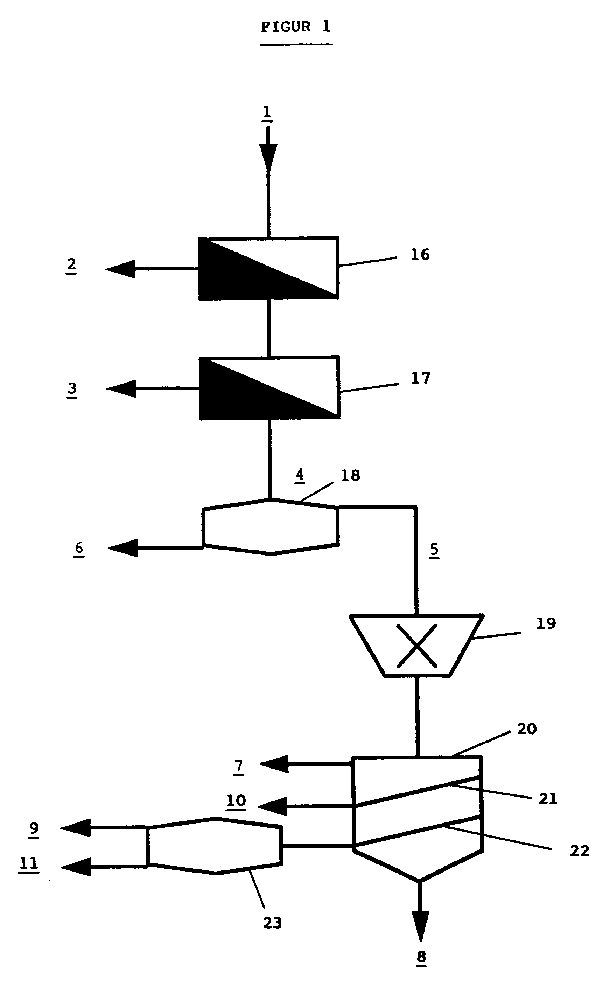

- Figur 1: ein Fließschema des erfindungsgemäßen Verfahrens;

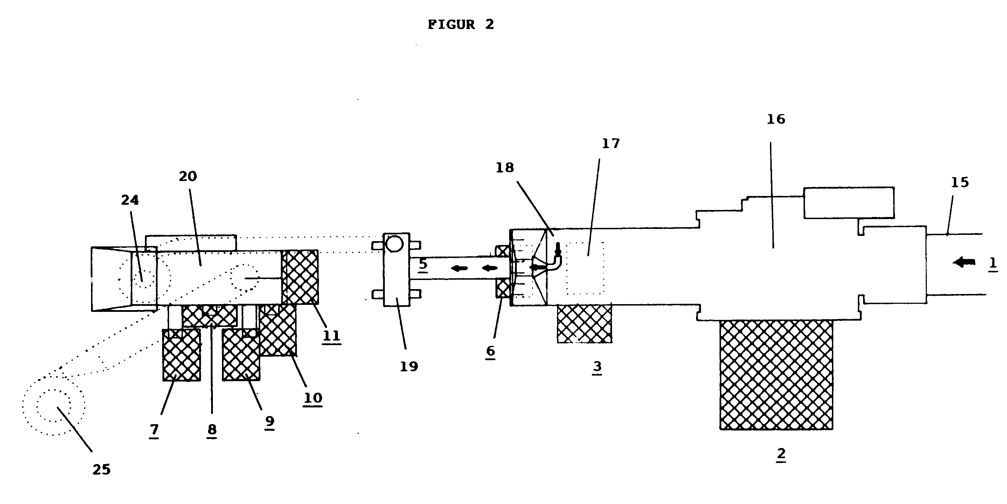

- Figur 2: eine Aufsicht auf die erfindungsgemäße Vorrichtung;

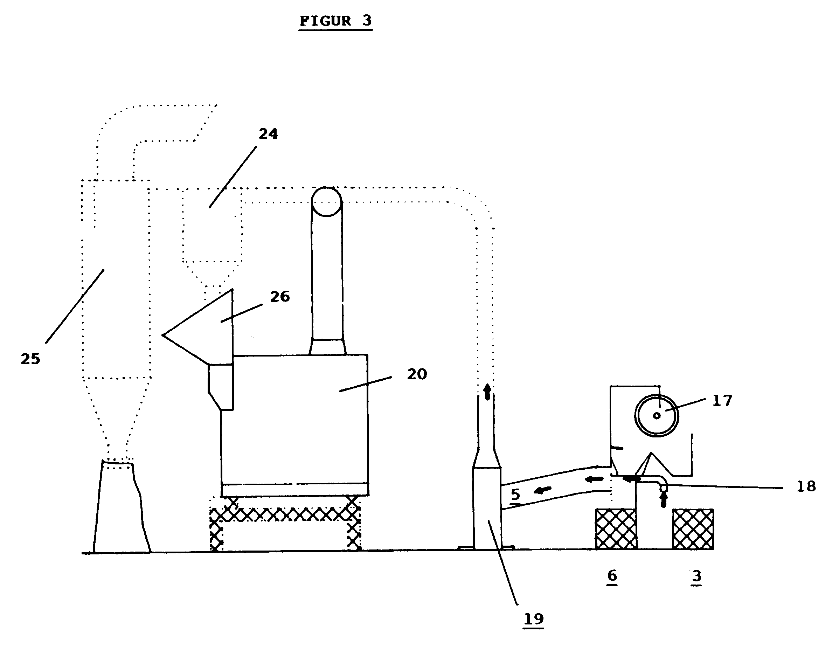

- Figur 3: eine Seitenansicht eines Teils der erfindungsgemäßen Vorrichtung.

Die aufzutrennenden Müllkomponenten, die in erster Linie Schwermetalle, wie Blei, Kupfer, Messing, Nickel, Zink, Cadmium, Quecksilber sowie den Wertstoff Aluminium und Fremdmaterial in Form von Kunststoffolien, Weißblechdosen, Kronkorken, Glas etc. umfassen, werden auf einem Förderband 15 einem Überbandmagneten 16 zugeführt. Dieser Überbandmagnet 16 dient dazu, eisenhaltiges, verwertbares, nicht-schadstoffbelastetes Material selektiv auszutragen. Zu diesem Material gehören insbesondere Dosen und Kronkorken. Der Abstand des Überbandmagneten 16 vom Förderband ist so eingestellt, daß schweres eisenhaltiges Material nicht erfaßt wird.

Das verbleibende Schüttgut wird mittels einer Schüttelrinne einem Trommelmagneten 17 zugeführt, der selektiv schwereres eisenhaltiges Material 3 erfaßt und austrägt. Zu dem schwereren eisenhaltigen Material zählen in erster Linie Batterien aufgrund ihres im Mantel vorhandenen Eisengehalts.

Das verbleibende nicht-magnetische Material 4 wird anschließend im freien Fall der Einwirkung eines Horizontalgebläses 18 ausgesetzt. Die Strömungsgeschwindigkeit des Luftstroms des Gebläses ist so eingestellt, daß schwerere Gegenstände 6, wie Glasflaschen, Glühbirnen, nicht-magnetische Batterien etc., den freien Fall fortsetzen und aufgefangen werden können.

Die durch Einwirkung des Horizontalgebläses 18 erhaltene leichtere Fraktion 5 umfaßt insbesondere Kunststoffolien, Aluminiumfolien, Papier etc. Dieses Material wird im Luftstrom des Gebläses in eine Messermühle 19 eingeführt. Die Messermühle 19 ist ausgerüstet mit einer Mahlbahn mit auswechselbarer Lochung von z.B. 30 mm als Zwangsaustrag. Es erfolgt eine selektive Zerkleinerung von Kunststoffolien und Aluminiumfolien. Letztere werden zerknüllt und stark zerkleinert, die Teilchengröße der Kunststoffolien wird jedoch wesentlich weniger reduziert. Ihre durchschnittliche Körnung liegt noch über dem jeweiligen Durchmesser der Lochung.

Das zerkleinerte Material wird im Luftstrom (der sich aus dem Eigenluftstrom der Messermühle 19 und dem Luftstrom des Horizontalgebläses 18 zusammensetzt) ausgetragen. In einem ersten Zyklon 24 wird die Luft entspannt. Das Material wird in den Einfülltrichter 26 eines Aspirateurs 20 eingetragen. Aus dem Einfülltrichter wird es mittels einer Riffelwalze kontinuierlich ausgetragen und im freien Fall auf ein erstes Schwingsieb 21 geführt. Zweckmäßigerweise kann man im Bereich des freien Falls einen leichten Unterdruck mittels eines im Luftstrom regulierbaren Ventilators anlegen. Dadurch wird sehr leichtes flugfähiges Material 7 (beispielsweise Styropor und kleine Teilchen aus Kunststoffolie) abgesaugt. Das Material wird in einer Entspannungskammer entspannt und über eine vibrierende Austragsrinne oder eine Austragsschnecke ausgetragen (nicht gezeigt).

Das erste Schwingsieb 21 weist Rundlöcher mit z.B. 24 mm ⌀ auf. Der Siebüberlauf, der in erster Linie aus Kunststoffmaterial 10 besteht, wird über eine vibrierende Austragsrinne oder eine Austragsschnecke (nicht gezeigt) ausgetragen. Der Siebdurchgang fällt auf das unter dem ersten Schwingsieb 21 liegende zweite Schwingsieb 22. Dieses besitzt Rundlöcher von z.B. 1 mm ⌀. Der Siebdurchgang der vor allem aus Glasmehl und Feinsand besteht, wird als Feingut über eine vibrierende Austragsrinne oder eine Austragsschnecke (nicht gezeigt) ausgetragen.

Der Siebüberlauf wird in einen im Luftstrom regulierbaren Steigsichter 23 eingetragen. Der Luftstrom ist so einreguliert, daß leichtes flugfähiges Material 9, das vor allem aus Aluminiumfolien besteht, als Leichtfraktion ausgehoben wird. Dieses Material wird in einer Entspannungskammer entspannt und über eine vibrierende Austragsrinne oder eine Austragsschnecke (nicht gezeigt) ausgetragen.

Nicht flugfähiges Material 11, das vor allem schwerere Metallpartikel umfaßt, passiert den Steigsichter und wird abgetrennt.

Die gesamte Abluft des Aspirateurs 20 wird einem zweiten Zyklon 25 zur Abscheidung von noch verbliebenen Stäuben und extrem leichten Restbestandteilen zugeführt.

## Patentansprüche

1. Verfahren zur Abtrennung von Metallen, insbesondere Schwermetallen und Aluminium aus metallhaltigen Müllkomponenten, wobei man
a) grob zerkleinerte metallhaltige Müllkomponenten (1) als Schüttgut auf Fördermitteln (15) ausbreitet und unter einem Magneten (16), der mit Mitteln zur selektiven Entfernung von leichtem ferromagnetischem Material (2) ausgestattet ist, durch dessen Magnetfeld hindurchführt,
b) das verbleibende Gut einem zweiten Magneten (17) zur Entfernung von schwerem ferromagnetischem Material (3) zuführt,
c) das verbleibende nicht-magnetische Material (4) einer Windsichtung unterwirft, wobei das mit der Sichtluft ausgetragene leichtere Material (5), das insbesondere Kunststoffolien, Aluminiumfolien, Papier etc. umfaßt, von dem zurückbleibenden schwereren Material (6), das insbesondere Glasflaschen, Glühbirnen, nicht-magnetische Batterien etc. umfaßt, getrennt wird,
**dadurch gekennzeichnet**,
daß man
d) das leichtere Material (5) auf eine Teilchengröße von maximal 50 mm zerkleinert,
e) dieses Material mindestens einmal siebt und einer nochmaligen Windsichtung unterwirft, so daß Kunststoff- und Aluminiummaterialien voneinander getrennt werden, wobei
man in Stufe e) beim Siebvorgang ein Sieb verwendet, dessen Lochung nur wenig kleiner ist als die maximale Teilchengröße des in Stufe d) erhaltenen Zerkleinerten Materials.

2. Verfahren nach Anspruch 1, dadurch gekennzeichnet, daß in Stufe e) vor dem Sieben besonders leichtes Material durch Absaugen oder Windsichten abgetrennt wird.

3. Verfahren nach Anspruch 1 oder 2, dadurch gekennzeichnet, daß man in Stufe e) das zerkleinerte Material zweimal siebt.

4. Verfahren nach Anspruch 3, dadurch gekennzeichnet, daß man in Stufe e) beim zweiten Siebvorgang ein Sieb mit einer Lochung von 0,5 bis 2 mm, vorzugsweise 1 bis 1,5 mm, verwendet.

5. Vorrichtung zur Durchführung des Verfahrens nach Anspruch 1 bis 5, mit
a) einem Förderband (15) für den Transport der metallhaltigen Müllkomponenten (1),
b) einem Überbandmagneten (16), der über dem Förderband (15) in einer solchen Entfernung angeordnet ist, daß aus den auf dem Förderband transportierten metallhaltigen Müllkomponenten (1) leichteres ferromagnetisches Material (2) selektiv entfernt wird,
c) einem förderstromabwärts angeordneten zweiten Magneten (17) zur Entfernung von schwererem ferromagnetischem Material (3) aus dem verbleibenden Schüttgut,
d) einem dem zweiten Magneten (17) nachgeordneten Gebläse (18), dessen Luftstrom so einregulierbar ist, daß leichteres Material (5), das insbesondere Kunststofffolien, Aluminiumfolien, Papier etc. umfaßt, von schwererem Material (6), das insbesondere Glasflaschen, Glühbirnen, nicht-magnetische Batterien etc. umfaßt, getrennt wird,
gekennzeichnet durch
e) eine Zerkleinerungsvorrichtung (19) zum Zerkleinern des durch das Gebläse (18) abgetrennten flugfähigen Materials (5) auf maximal 50 mm Partikelgröße,
f) einen der Zerkleinerungsvorrichtung (19) nachgeordneten Aspirateur (20) mit mindestens einer Siebvorrichtung (21,22) und einem Windsichter (23), wobei
das Schwingsieb (21) eine Lochung aufweist, die nur geringfügig kleiner ist als die maximale Partikelgröße des zerkleinerten Materials.

6. Vorrichtung nach Anspruch 5, dadurch gekennzeichnet, daß der Überbandmagnet (16) mit Transportmitteln zum Austragen des vom Magneten herausgenommenen Materials (2) ausgestattet ist.

7. Vorrichtung nach Anspruch 5 oder 6, dadurch gekennzeichnet, daß der Magnet (17) ein Trommelmagnet ist, mit einer rotierenden Trommel und einem in der Trommel starr angeordneten halbzylindrischen Magneten.

8. Vorrichtung nach einem der Ansprüche 5 bis 7, dadurch gekennzeichnet, daß die Zerkleinerungsvorrichtung (19) eine Messermühle mit einer Mahlbahn mit einer Lochung im Bereich von 5 bis 50 mm, insbesondere 10 bis 40 mm, ist.

9. Vorrichtung nach einem der Ansprüche 5 bis 8, dadurch gekennzeichnet, daß der Aspirateur (20) mit zwei Schwingsieben ausgestattet ist.

10. Vorrichtung nach Anspruch 9, dadurch gekennzeichnet, daß das zweite Schwingsieb (22) eine Lochung im Bereich von 0,5 bis 2 mm, vorzugsweise 1 bis 1,5 mm, aufweist.

## Claims

1. A process for separating metals, in particular heavy metals and aluminum, from metal-containing refuse components, which comprises
a) distributing coarsely comminuted, metal-containing refuse components (1) as bulk material on conveyor means (15) and passing said components through the magnetic field under a magnet (16) provided with means for selective removal of light, ferromagnetic material (2),
b) feeding the remaining material to a second magnet (17) to remove heavy, ferromagnetic material (3), and
c) subjecting the remaining, nonmagnetic material (4) to an air classification, causing a separation of the lighter material (5), expelled by the air stream, which comprises, in particular, plastic sheet, aluminum foil, paper, etc., from the remaining, heavier material (6), which comprises, in particular, glass bottles, light bulbs, nonmagnetic batteries, etc.,
**characterized in that**
d) the lighter material (5) is comminuted to a maximum particle size of 50 mm,
e) said material is screened at least once and subjected to a further air classification in order to separate plastic and aluminum components from each other,
using a screen in step e), the hole diameter of which is only slightly smaller than the maximum particle size of the comminuted material obtained in step d).

2. The process according to claim 1, characterized in that particularly light material is separated by suction or air classification in step e) prior to screening.

3. The process according to claim 1 or 2, characterized in that said comminuted material is screened twice in step e).

4. The process according to claim 3, characterized in that the second screening operation in step e) uses a screen having a hole diameter of 0.5 to 2 mm, preferably 1 to 1.5 mm.

5. A device for carrying out the process according to claims 1 to 5, which comprises
a) a conveyor belt (15) for the transport of the metal-containing refuse components (1),
b) a suspended belt magnetic separator (16), which is placed above conveyor belt (15) at a distance sufficient to selectively separate out the light, ferromagnetic material (2) from the metal-containing refuse components (1),
c) a second magnet (17) positioned downstream for the removal of heavy ferromagnetic material (3) from the remaining bulk material,
d) a fan (18) placed after the second magnet (17), the airstream of which may be adjusted such that the lighter material (5), which comprises, in particular, plastic sheet, aluminum foil, paper, etc., is separated from the heavier material (6), which comprises, in particular, glass bottles, light bulbs, nonmagnetic batteries, etc.,
**characterized in that** it comprises
e) a comminution device (19) for comminuting to a maximum particle size of 50 mm the dispersible material separated out by fan (18),
f) an aspirator (20) positioned after the comminution device (19) and comprising at least one screening device (21,22) and an air classifier (23), wherein the hole diameter of vibrating screen (21) is only slightly smaller than the maximum particle size of the comminuted material.

6. The device according to claim 5, characterized in that the suspended belt magnetic separator (16) is provided with transport means for carrying out the material (2) separated out by the magnet.

7. The device according to claim 5 or 6, characterized in that said magnet (17) is a drum cobber comprising a rotating drum and a fixed, semi-cylindrical permanent magnet placed inside said drum.

8. The device according to anyone of claims 5 to 7, characterized in that said comminuting device (19) is a cutter which comprises a grinding track having a hole diameter in the range of 5 to 50 mm, and in particular 10 to 40 mm.

9. The device according to anyone of claims 5 to 8 characterized in that said aspirator (20) is provided with two vibrating screens.

10. The device according to claim 9, characterized in that the second vibrating screen (22) has a hole diameter in the range of 0.5 to 2 mm, preferably 1 to 1.5 mm.

## Revendications

1. Procédé pour la séparation de métaux, en particulier de métaux lourds et d'aluminium, à partir de composants de déchets contenant des métaux, dans lequel
a) on étend des composants de déchets (1) contenant des métaux grossièrement broyés, comme matériaux en vrac, sur des moyens de transport (15) et on les fait passer sous un aimant (16), qui est équipé de moyens destinés à éliminer sélectivement des matériaux ferromagnétiques légers (2), par le champ magnétique de celui-ci,
b) on amène les matériaux restants vers un second aimant (17) destiné à éliminer les matériaux ferromagnétiques lourds (3),
c) on soumet le matériau non-magnétique (4) restant à une séparation par ventilation, les matériaux plus légers (5) dispersés par l'air de séparation, qui comprennent, en particulier, des feuilles de matière plastique, des feuilles d'aluminium, du papier, etc., étant ainsi séparés des matériaux plus lourds (6) restants, qui comprennent, en particulier, des bouteilles en verre, des ampoules électriques, des piles non-magnétiques, etc.,
caractérisé par le fait
d) qu'on broie le matériau plus léger (5) à une grosseur de particules de 50 mm au maximum,
e) qu'on tamise au moins une fois ce matériau et qu'on le soumet à une nouvelle séparation par ventilation, de sorte que les matériaux plastiques et d'aluminium sont séparés les uns des autres, un tamis étant utilisé à l'étape e), dans l'opération de tamisage, tamis dont les trous ne sont que légèrement plus petits que la grosseur de particules maximale des matériaux broyés obtenus à l'étape d).

2. Procédé selon la revendication 1, caractérisé par le fait qu'à l'étape e), avant le tamisage, le matériau particulièrement léger est séparé par aspiration ou par séparation par ventilation.

3. Procédé selon la revendication 1 ou 2, caractérisé par le fait qu'à l'étape e), le matériau broyé est tamisé deux fois.

4. Procédé selon la revendication 3, caractérisé par le fait qu'à l'étape e), on utilise, lors de la seconde opération de tamisage, un tamis ayant des trous de 0,5 à 2 mm, de préférence de 1 à 1,5 mm.

5. Dispositif pour la mise en oeuvre du procédé selon l'une des revendications 1 à 5, avec
a) une bande transporteuse (15) destinée au transport des composants de déchets (1) contenant des métaux,
b) un aimant (16) de surplomb de bande, qui est disposé au-dessus de la bande transporteuse (15), à une distance telle que le matériau ferromagnétique léger (2) est éliminé sélectivement hors des composants de déchets (1) contenant des métaux et transportés sur la bande transporteuse,
c) un second aimant (17), disposé en aval dans le sens du transport, destiné à éliminer le matériau ferromagnétique lourd (3) hors du matériau en vrac restant,
d) un ventilateur (18), disposé après le second aiment (17), dont le courant d'air peut être régulé de façon que le matériau plus léger (5), qui comprend, en particulier, des feuilles de matière plastique, des feuilles d'aluminium, du papier, etc., est séparé du matériau plus lourd (6), qui comprend, en particulier, des bouteilles en verre, des ampoules électriques, des piles non-magnétiques, etc.,
caractérisé par
e) un dispositif de broyage (19) destiné au broyage du matériau pouvant voler (5), séparé par le ventilateur (18), à une grosseur de particules de 50 mm au maximum,
f) un aspirateur (20), disposé après le dispositif de broyage (19), avec eu moins un dispositif de tamisage (21, 22) et un séparateur à ventilation (23),
le dispositif de tamisage (21) présentent des trous qui ne sont que légèrement plus petits que la grosseur maximale de particules du matériau broyé.

6. Dispositif selon la revendication 5, caractérisé par le fait que l'aimant de surplomb de bande (16) est équipé de moyens de transport destinés à sortir le matériau (2) extrait par l'aimant.

7. Dispositif selon la revendication 5 ou 6, caractérisé par le fait que l'aimant (17) est un aimant à tambour, avec un tambour rotatif et avec un aimant semi-cylindrique disposé fixe dans le tambour.

8. Dispositif selon l'une des revendications 5 à 7, caractérisé par le fait que le dispositif de broyage (19) est un broyeur à lames avec un chemin de broyage à trous de l'ordre de 5 à 50 mm, en particulier de 10 à 40 mm.

9. Dispositif selon l'une des revendications 5 à 8, caractérisé par le fait que l'aspirateur (20) est équipé de deux tamis oscillants.

10. Dispositif selon la revendication 9, caractérisé par le fait que le second tamis oscillant (22) présente des trous de l'ordre de 0,5 à 2 mm, de préférence de 1 à 1,5 mm.
